# EUROPEAN PATENT APPLICATION

(11) **EP 2 592 315 A1**
(43) Date of publication of application: **15.05.2013**
(21) Application number: 12191965.8
(22) Date of filing: 09.11.2012
(51) Int. Cl.: F16K 11/048

(54) **Hot and cold water mixer**

(30) Priority: 10.11.2011 JP 2011246416
(71) Applicant: Mikuni Corporation, Tokyo 101-0021 (JP)
(72) Inventor: Kubo, Satoshi, Iwate, 0200188 (JP); Yokosawa, Fumitaka, Iwate, 0200188 (JP)
(74) Representative: Prüfer & Partner GbR European Patent Attorneys

(57) **Abstract**

A hot and cold water mixer that can shorten a distance and a time from each of a hot-water valve and a cold-water valve to mixture of hot water and cold water when the hot water and the cold water are homogenized in a short time during the mixture by generating swirling flows in the hot water and the cold water.

## Description

### BACKGROUND

### Technical Field

The present invention relates to a hot and cold water mixer that mixes hot water and cold water when warm water having a set temperature is supplied by mixing the cold water and the heated hot water.

### Related Art

In a conventional hot and cold water mixer, a temperature sensor is disposed on a downstream side of a mixing control valve that adjusts a hot-water supply and a cold-water supply, and temperature control is performed based on a temperature sensed by the temperature sensor.

In the mixing control valve of the conventional hot and cold water mixer, the hot water and the cold water are simultaneously supplied to generate the warmwater of the set temperature. However, in a flow channel immediately after the hot water and the cold water cold water merge actually, the hot water and the cold water are partially mixed, a flow of a hot-water layer in which the temperature is higher than the set temperature and a flow of a cold-water layer in which the temperature is lower than the set temperature exist to hardly measure the correct temperature using the temperature sensor.

Although the hot-water layer and the cold-water layer are finally mixed to generate the warm water having the substantially homogeneous temperature, the hot water and the cold water flow in a relatively long distance from the mixing control valve until the substantially homogeneous temperature is obtained. In this case, in order to accurately measure the temperature of the warm water in which the hot water and the cold water are mixed using the temperature sensor, it is necessary to dispose the temperature sensor close to the mixing control valve, on an upstream side of the flow channel immediately after the hot water and the cold water are mixed, on a downstream side of the position where the hot water and the cold water are mixed, and at a position distant from the mixing control valve in which the hot water and the cold water are substantially homogeneously mixed. Even if the temperature is measuredusing the temperature sensor at the position immediately after the hot water and the cold water are mixed, possibly the temperature varies depending on a sectional position of the flow channel, and the different temperatures are measured according to the position of the temperature sensor. The measured temperature fluctuates in the case that a flow of the warm water in which the hot water and the cold water are mixed changes by a change in flow rate and the like. In this case, the temperature cannot be measured when actually the hot water and the cold water are substantially homogeneously mixed.

Thus, the temperature sensor is located far away from the positionwhere the mixing control valve adjusts the hot-water supply and the cold-water supply to mix the hot water and the cold water. Therefore, for example, even if the temperature changes based on the alteration of a mixing ratio of the hot water and the cold water, because of the distant temperature sensor, a long time difference is generateduntil the actual temperature changebecomes clear since the mixing ratio of the hot water and the cold water is altered by the mixing control valve.
In this case, in the temperature control it is necessary to perform complicated control in order to correct the delay of the temperature measurement. Accordingly, possibly it takes a long time to produce a control program during development of the hot and cold water mixer, which results in lengthening of a development time and an increase of a development cost.

In the hot and cold water mixer, when the hot water and the cold water, in which a flow rate and a pressure are adjusted after the hot water and the cold water pass through control valves, are caused to flow into the cylindrical mixing chamber, the hot water and the cold water flow into the cylindrical mixing chamber along a cylindrical inner circumferential surface of the mixing chamber, thereby generating swirling flows in the mixing chamber. At this point, the hot water and the cold water are identical to each other in a swirling direction of the swirling flow. A mixing projection is provided in the inner circumferential surface of the mixing chamber, the hot water and the coldwater, whichbecomes the swirling flows during the inflow, strike on the mixing projection to generate a vortex flow. Therefore, the hot water and the cold water are homogeneously mixed.

A hot and cold water mixer disclosed in Japanese Patent Application Laid-Open No. 5-53655 has a complicated structure in which the hot water and the cold water, in which the mixing ratio is adjusted while the pressure is adjusted, are caused to flow into the cylindrical mixing chamber from the right and left of the mixing chamber such that the swirling flow is generated in the mixing chamber. Because of the complicated structure, possibly the hot and cold water mixer is enlarged.
Possibly the flow channel from the cold-water-side valve and the hot-water-side valve to the mixing chamber is lengthened, and it takes a long time to actually mix the hot water and the cold water since the flow rates are adjusted by the cold-water-side valve and the hot-water-side valve. Accordingly, in the case that the temperature sensor is provided at the position where the hot water and the cold water are substantially homogeneously mixed, possibly the time difference is generated until the temperature can be measured since the flow rate is adjusted by the mixing control valve.
In other words, in the hot and cold water mixer of Japanese Patent Application Laid-Open No. 5-53655, the hot water and the cold water, which are ejected from the valves, are not immediately mixed, but mixed through the structure that swirls the hot water and the cold water. Therefore, the distance from the valve to the mixing position is lengthened, the efficient mixture of the hot water and the cold water are insufficiently performed, but the hot water and the cold water cannot substantially homogeneously be mixed in a short time.

### SUMMARY

In view of the foregoing, an object of the present invention is to provide a hot and cold water mixer in which, when the hot water and the cold water are homogenized in a short time during the mixture by generating the swirling flows in the hot water and the cold water, the structures that generate the swirling flows are provided on the upstream sides of the valve that adjusts the hot-water flow rate and the valve that adjusts the cold-water flow rate, the hot water and the cold water, which are ejected from the valves, are immediately mixed to be able to shorten the distance and the time from the hot-water and cold-water valves to the mixing chamber that mixes the hot water and the cold water.

In order to achieve the object, a hot and cold water mixer according to a first aspect is characterized by including: a body that includes a mixing chamber, the mixing chamber mixing hot water and cold water therein; a cold-water valve that is provided in the body to adjust a cold-water flow rate, an ejection side of the cold-water valve being oriented toward the mixing chamber; a hot-water valve that is provided in the body to adjust a hot-water flow rate, an ejection side of the hot-water valve being oriented toward the mixing chamber; a cold-water inflow port that is provided in an in-take side of the cold-water valve of the body; a hot-water inflow port that is provided in an in-take side of the hot-water valve of the body; an outflow port that is provided while communicated with the mixing chamber of the body; a cold-water swirling part that is provided between the cold-water inflow port and the cold-water valve to generate a swirling flow in the cold water flowing into the cold-water valve; and a hot-water swirling part that is provided between the hot-water inflow port and the hot-water valve to generate a swirling flow in the hot water flowing into the hot-water valve.

According to the first aspect of the present invention, the cold-water swirling part generates the swirling flow in the cold water, which flows into the cold-water valve and flows out to the mixing chamber, and the cold water in which the swirling flow is generated reaches the mixing chamber. The hot-water swirling part generates the swirling flow in the hot water, which flows into the hot-water valve and flows out to the mixing chamber, and the hot water in which the swirling flow is generated reaches the mixing chamber. In the mixing chamber, the swirling cold water and hot water come up against each other, and the hot water and the cold water are substantially homogeneously mixed when the hot water and the cold water flow out to the outflow port.

In this case, the structure that generates the swirling flow is eliminated between the hot-water valve and the mixing chamber, and the structure that generates the swirling flow is eliminated between the cold-water valve and the mixing chamber, so that the hot-water valve and the cold-water valve are disposed adjacent to the mixing chamber. That is, the hot water ejected from the hot-water valve and the cold water ejected from the cold-water valve are immediately mixed, and immediately homogeneously mixed by the swirling flows of the hot water and the cold water.

Accordingly, the temperature sensor that measures the temperature of the warm water in which the hot water and the cold water are mixed can be disposed close to the cold-water valve and the hot-water valve. Therefore, when the warm-water temperature is controlled by adjusting the opening degrees of the cold-water valve and the hot-water valve, once the opening degrees of the cold-water valve and the hot-water valve are altered, the temperature change due to the alteration of the opening degrees can be measured and output. The complication of the temperature control can be prevented.

According to the first aspect of the invention, the hot and cold water mixer according to a second aspect is characterized in that the body is formed into a substantially cylindrical shape, the cold-water valve and the hot-water valve face each other with the mixing chamber interposed therebetween, and a line segment connecting a center of the cold-water valve and a center of the hot-water valve and a center line along an axial direction of the body are disposed so as to substantially overlap each other, center lines of the cold-water and hot-water inflowports are substantially cross to the center line of the body, and the center lines of the cold-water and hot-water inflow ports are deviated from the center line of the body so as not to be cross to the center line of the body, thereby configuring the cold-water and hot-water swirling parts.

According to the second aspect of the present invention, the cylindrical body is cross to the inflow port, and the center lines of the body and the inf low port are deviated from each other, whereby the hot water and the cold water, which flow from the inflow port into the body, become the swirling flow. Accordingly, the swirling flow can be generated by the simple configuration in which the body is cross to the inflow port while the center lines of the body and the inflowport are deviated from each other. The generated swirling flows pass through the openings of the cold-water valve and the hot-water valve, in which the centers are substantially aligned. Therefore, the swirling flows are ejected from the water valve and the hot-water valve while kept in the swirling state. The hot water and the cold water are mixed in a short time by the simple structure, so that the hot and cold water mixer can be produced at low cost while the enlargement of the hot and cold water mixer is suppressed.

According to the first or second aspect of the invention, the hot and cold water mixer according to a third aspect is characterized in that a swirling direction of the cold water in the cold-water swirling part and a swirling direction of the hot water in the hot-water swirling part are identical to each other.

According to the third aspect of the present invention, the cold water and the hot water are oriented toward the same swirling direction, which allows the cold water and the hot water to be substantially homogeneously mixed with certainty at high speed.

According to the present invention, in the hot and cold water mixer, the cold water ejected from the cold-water valve that adj usts the water flow rate and the hot water ejected from the hot-water valve that adjusts the hot-water flow rate can substantially homogeneously be mixed in the neighborhoods of the cold-water valve and the hot-water valve. Accordingly, the temperature change of the warm water due to the alterations of the cold-water and hot-water flow rates by the cold-water valve and the hot-water valve can immediately be measured to facilitate the control in which the hot water and the cold water are mixed to obtain the warm water at the set temperature.

### BRIEF DESCRIPTION OF DRAWINGS

Fig. 1 is a bottom view illustrating a hot and cold water mixer according to an embodiment of the present invention;
Fig. 2 is a side view illustrating the hot and cold water mixer;
Fig. 3 is a sectional view taken on a line W-W of Fig. 2;
Fig. 4 is a sectional view taken on a line X-X of Fig. 1;
Fig. 5 is a sectional view taken on a line Y-Y of Fig. 1;
Fig. 6 is a sectional view taken on a line Z-Z of Fig. 2;
   and

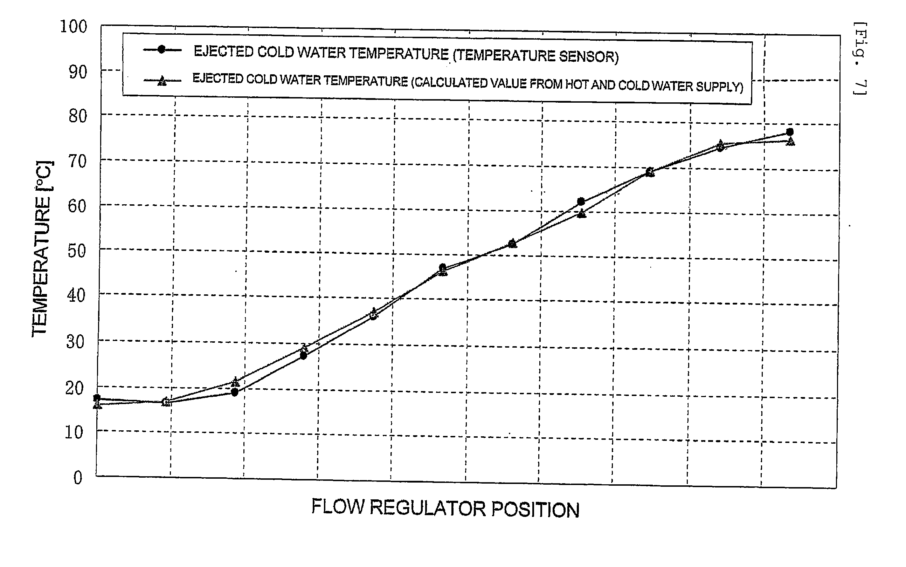

Fig. 7 is a graph illustrating a calculatedvalue of warm-water temperature based on a mixing ratio of hot water and cold water and a measured value of a temperature sensor.

### DETAILED DESCRIPTION

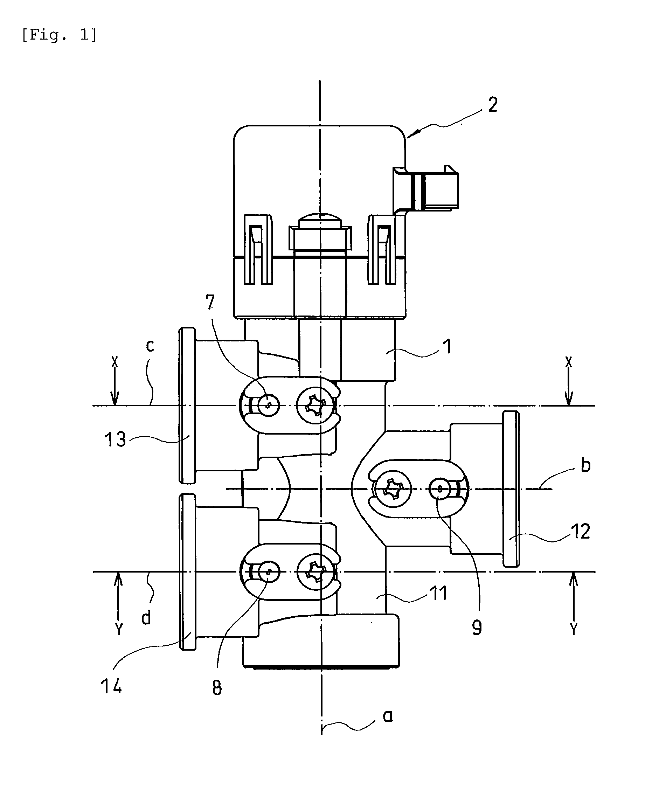

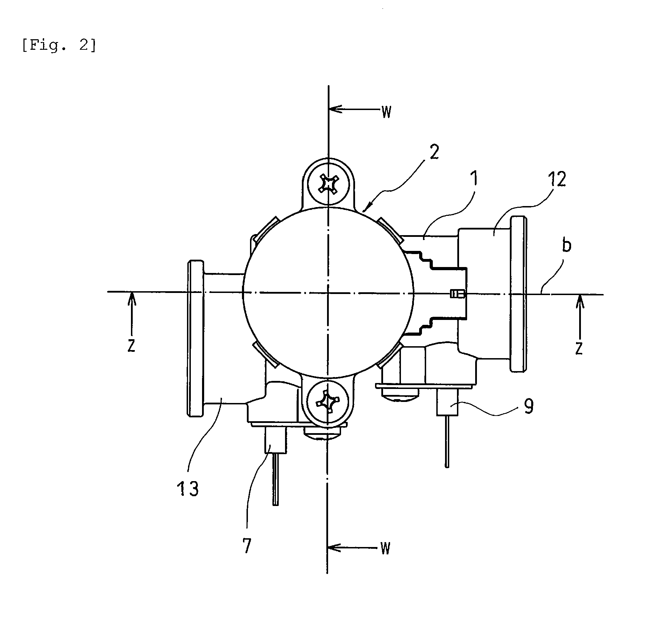

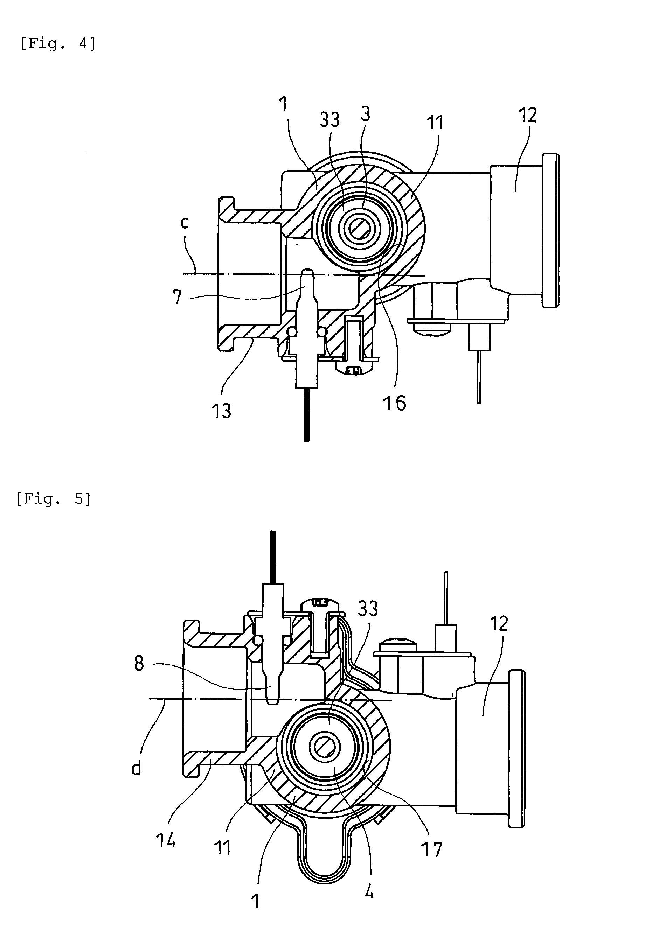

Hereinafter, an embodiment of the invention will be described with reference to the drawings.
As illustrated in Figs. 1 to 6, a hot and cold water mixer of the embodiment includes a body 1 in which a main body 11 has a substantially cylindrical shape, a motor unit 2 that is attached to one of end portions of the body 1, a cold-water valve 3 and a hot-water valve 4, which are disposed in the body 1, and a mixing chamber 6 that is provided between the cold-water valve 3 and the hot-water valve 4.
The body 1 includes the cylindrical main body 11, a cylindrical outflow port unit 12 that is connected to a central portion of the main body 11, a cylindrical cold-water inflow port unit 13 that is connected to one of end portions of the main body 11, and a cylindrical hot-water inflow port unit 14 that is connected to the other end portion of the main body 11.

The body 1 includes a valve seat 32, a valve seat 42, the mixing chamber 6, a cold-water swirling part 16, and a hot-water swirling part 17. The valve seat 32 is provided on slight one end portion side from the center of the main body 11, and includes an opening 31 through which the cold water of the cold-water valve 3 passes. The valve seat 42 is provided on slight one end portion side from the center of the main body 11, and includes an opening 41 through which the hot water of the hot-water valve 4 passes. The mixing chamber 6 is provided between the valve seat 32 of the cold-water valve 3 and the valve seat 42 of the hot-water valve 4 , and communicated with the outflow port unit 12. The cold-water inflow port unit 31 is communicated with the cold-water swirling part 16 on one end portion side from the cold-water valve 3. The hot-water inflow port unit 32 is communicated with the hot-water swirling part 17 on the other end portion side from the hot-water valve 4.

A center line b of the cylindrical outflow port unit 12 is cross to (intersects) a center line a (a center line in an internal space of the main body 11) of the substantially cylindrical main body 11.
On the other hand, the center line a of the main body 11 does not intersect a center line c of the cylindrical cold-water inflow port unit 13 and a center line d of the cylindrical hot-water inflow port unit 14. The center line b of the main body 11 differs from the center line c of the cold-water inflow port unit 13 and the center line d of the hot-water inflow port unit 14 in a direction by 90 degrees.

The center lines c and d of the cold-water and hot-water inflow port units 13 and 14 are deviated downward from the center line a of the main body 11, and located in substantial bottom portions of cold-water and hot-water swirling parts 16 and 17 (the space in the body 1) of the main body 11. According to the above configuration, the cold water flowing from the cold-water inflow port unit 13 into the cold-water swirling part 16 swirls along an inner circumferential surface of the swirling part 16, and the hot water flowing from the hot-water inflow port unit 14 into the hot-water swirling part 17 swirls along an inner circumferential surface of the swirling part 17.

Each of the cold-water swirling part 16 and the hot-water swirling part 17 constitutes a circular-truncated-cone-shaped space in which the central side (the side of the mixing chamber 6) of the main body 1 is thinned. In the swirling parts 16 and 17, upper surfaces located on opposite sides to bottom surfaces of the circular truncated cones (or circular-truncated-cone-shaped spaces) face each other with a gap. The swirling parts 16 and 17 that are of the circular-truncated-cone-shaped spaces are coaxially disposed.

The valve seat 32 (the opening 31) of the cold-water valve 3 is provided in a portion corresponding to the upper surface of the circular truncated cone of the cold-water swirling part 16, and the valve seat 42 (the opening 41) of the hot-water valve 4 is provided in a portion corresponding to the upper surface of the circular truncated cone of the hot-water swirling part 17. The swirling parts 16 and 17, the openings 31 and 41, and the valve seats 32 and 42 are coaxially disposed. The swirling parts 16 and 17 are formed into the substantially same shape, the openings 31 and 41 are formed into the substantially same shape, and the valve seats 32 and 42 are formed into the substantially same shape.

The opening 31 of the cold-water valve 3 and the opening 41 of the hot-water valve 4, which face each other, are communicated by a cylindrical space in which a diameter is slightly smaller than that of the openings 31 and 41. The mixing chamber 6 that is of a rectangular-solid-shaped space is provided along the center line a of the outflow port unit 12 so as to be cross to an axial direction of the cylindrical space. The mixing chamber 6 pierces the cylindrical space that communicates the openings 31 and 41 with each other, and one end portion side of the mixing chamber 6 projects from the cylindrical space. The other end portion side of the space constituting the mixing chamber 6 is communicated with an internal space of the cylindrical outflow port unit 12, and the hot water and the cold water, which are mixed in the mixing chamber 6, canflowout f rom the outflowport unit 12 as substantially homogeneous warm water.
An opening on one end portion side of the cylindrical main body 11 is closed by the motor unit 2, and an opening of the other end portion side is closed by a coupling shaft supporting member 5.

For example, the motor unit 2 is a stepping motor unit. The motor unit 2 includes a linear screw mechanism in which a male screw and a female screw engage each other. The motor unit 2 transduces a motor rotation of the motor unit 2 in linear motion to enable a transmission shaft 24 to move along an axial direction (the same direction as the center line a that is of a valve axis) of the transmission shaft 24.
The movement of the transmission shaft 24 can move a valve element 33 of the cold-water valve 3 and a valve element 43 of the hot-water valve 4, which are integrally formed as described below, in the direction of the valve axis (substantially aligned with the center line a) that is of a line segment connecting centers of the valve seats 32 and 42. The cold-water valve 3 and the hot-water valve 4 are opened and closed by the movements of the valve elements 33 and 43.

The cold-water valve 3 and the hot-water valve 4 include the valve seats 32 and 42 and the valve elements 33 and 43 that open and close the openings 31 and 41 of the valve seats 32 and 42, respectively.

Like the valve seats 32 and 42, the valve elements 33 and 43 are coaxially disposed while facing each other.
The valve elements 33 and 43 are integrally coupled by a coupling shaft 36 disposed on the centers of the valve elements 33 and 43. One end portion (motor unit) side of the coupling shaft 36 pierces the valve element 33, and is coupled to the transmission shaft 24. The other end portion side of the coupling shaft 36 is supported by the coupling shaft supporting member 5 while being movable in the axial direction of the coupling shaft 36.
The coupling shaft supporting member 5 includes a cover unit 51 and a cylindrical unit 52. The cover unit 51 is formed by a concave curved surface that constitutes a cover closing the other end portion of the body 1. The cylindrical unit 52 has the substantially same inner diameter as an outer diameter of the coupling shaft 36, and the other end portion of the coupling shaft 36 is inserted in the cylindrical unit 52.

A gap between the valve elements 33 and 43 fixed to the coupling shaft 36 is wider than a gap between the valve seats 32 and 42. Accordingly, both the cold-watervalve 3 including the valve element 33 and the valve seat 32 and the hot-water valve 4 including the valve element 43 and the valve seat 42 are opened when the center between the valve elements 33 and 43 is aligned with the center between the valve seats 32 and 42.

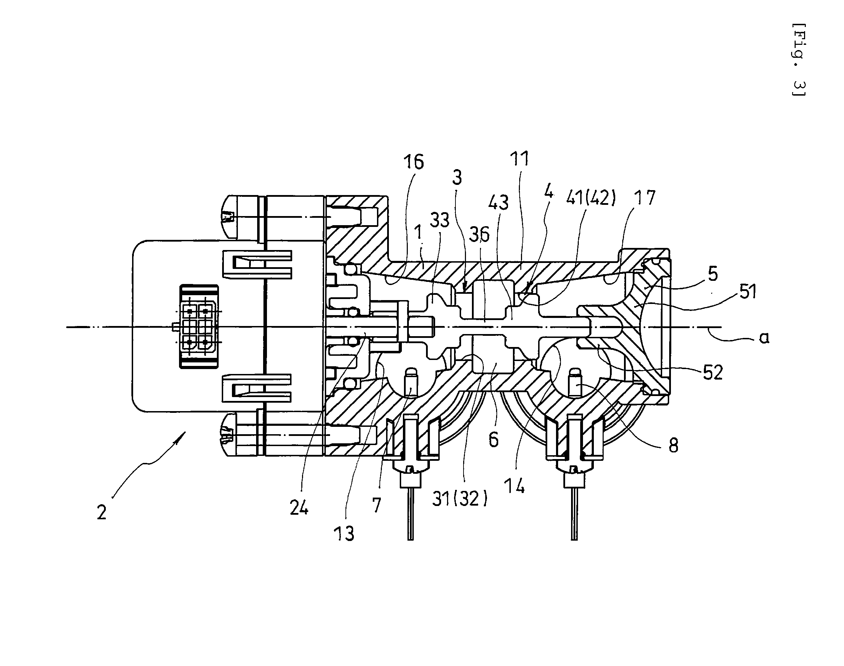

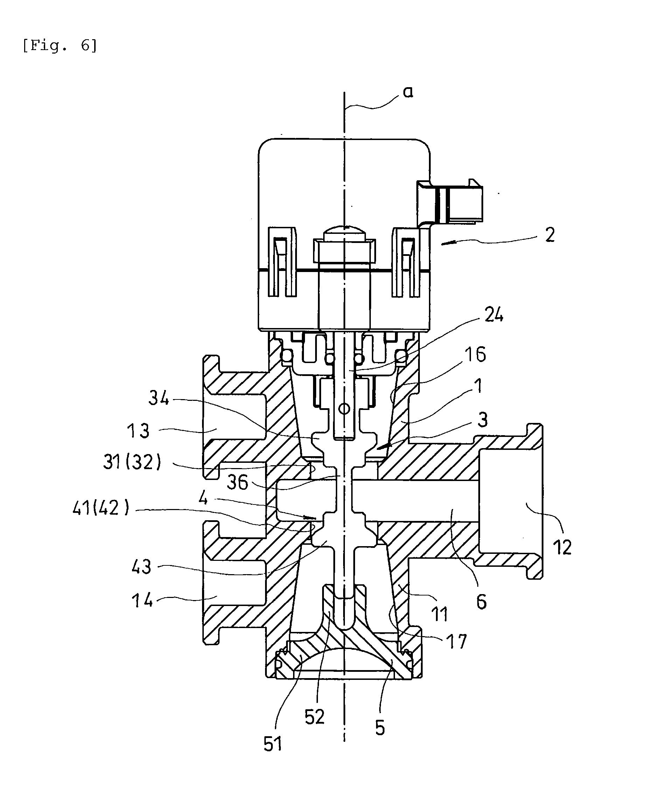

When the valve elements 33 and 43 integrated with the coupling shaft 36 are maximally moved onto the side of the motor unit 2 (one end portion of the coupling shaft) as illustrated in Figs. 3 and 6, the valve element 43 abuts on the valve seat 42, whereby the hot-water valve 4 is fully closed while the cold-water valve 3 is fully opened. On the other hand, when the valve elements 33 and 43 are maximally moved onto the side of the coupling shaft supporting member 5 (the other end portion), the valve element 33 abuts on the valve seat 32, whereby the cold-water valve 3 is fully closed while the hot-water valve 4 is fully opened.

In the cold-water valve 3 and the hot-water valve 4, the valve elements 33 and 43 are disposed not on the central portion side but outsides of the valve seats 32 and 42, which are disposed while the central portion of the body is interposed therebetween, the cold-water and hot-water inflow port units 13 and 14 are also disposed on the outsides of the valve seats 32 and 42, and the outflow port 12 is disposed on the central side of the valve seats 32 and 42. Therefore, the cold-water valve 3 and the hot-water valve 4 eject the cold water and the hot water onto the side facing each other.

A cold-water temperature sensor 7 that measures a temperature of the inflowing cold water is provided in the cold-water inflow port unit 13 of the body 1 while piercing the body 1 from the outside to the inside, and a hot-water temperature sensor 8 that measures a temperature of the inflowing hot water is provided in the hot-water inflow port unit 14 while piercing the body 1 from the outside to the inside. A warm-water temperature sensor 9 that measures a temperature of the inflowing warm water, in which the hot water and the cold water are mixed, is provided in the warm-water outflow port unit 12 in which the hot water and the cold water are mixed while piercing the body 1 from the outside to the inside.

In the hot and cold water mixer, the stepping motor of the motor unit 2 is controlled by a control device (not illustrated) . Based on the measured temperatures input from the cold-water temperature sensor 7, the hot-water temperature sensor 8, and the warm-water temperature sensor 9, the control device controls the rotation of the stepping motor to control opening degrees of the cold-water valve 3 and the hot-water valve 4, thereby adjusting a mixing ratio of the cold water and the hot water. Therefore, the temperature of the warm water flowing out through the outflow port unit 12 is set to and kept at the set temperature.

In the hot and cold water mixer, the center of the opening 31 of the valve seat 32 of the cold-water valve 3 and the center of the opening 41 of the valve seat 42 of the hot-water valve 4 are disposed on the center line (basically aligned with the center line of the body) of the internal space of the body 1. On the other hand, the center lines of the cold-water and hot-water inflow port units 13 and 14 are disposed at a right angle to the center line of the body , and deviated from the center line of the body 1 so as not to intersect the center line of the body 1.

Therefore, as described above, the swirling flow is generated in the cold water and the hot water, which flow into the body 1, and the swirling cold water and hot water flow from the cold-water valve 3 and the hot-water valve 4 into the mixing chamber 6 located in the central portion of the cold-water valve 3 and the hot-water valve 4. At this point, the cold water and the hot water, which swirl in the same direction, are mixed in a relatively short time. In other words, the cold water ejected from the cold-water valve 3 and the hot water ejected from the hot-water valve 4 are mixed in the substantially homogeneous state until the cold water and the hot water flow in a short distance since coming up against each other and start to be mixed.

At this point, the structure that generates the swirling flow in the cold water and the hot water is located not on the ejection sides but on the in-take side of the cold-water valve 3 and the hot-water valve 4. Therefore, the structure that swirls the cold water and the hot water is eliminated between the ejection sides of the cold-water valve 3 and the hot-water valve 4 and the mixing chamber, and the cold water and the hot water, which are ejected from the cold-water valve 3 and the hot-water valve 4, are already swirled, thereby being able to construct the structure that immediately causes the cold water and the hot water, which are ejected from the cold-water valve 3 and the hot-water valve 4, to flow into the mixing chamber.

The hot water and the cold water, which flow into the mixing chamber in the swirling state, are homogenized in a short time, so that the temperature sensor 9 can accurately measure the warm water in which the hot water and the cold water are mixed even if the temperature sensor 9 is disposed at a position close to the cold-water valve 3 and the hot-water valve 4. That is, unlike the conventional case that the cold water and the hot water, which come up against each other from the cold-water valve 3 and the hot-water valve 4, are not homogenized but partially flow in the laminar form, the cold water and the hot water, which come up against each other, are immediately and homogeneously mixed, so that the temperature can accurately be measured even if the temperature sensor 9 is disposed close to the hot-watervalve 4 and the cold-water valve 3.

It is necessary that the temperature sensor 9 be disposed substantially at the same distance from the cold-water valve 3 and the hot-water valve 4. Conventionally, in the hot and cold water mixer in which the mechanism that swirls the cold water and the hot water is provided between the cold-water valve and the hot-water valve and the mixing chamber, it is necessary that the cold water and the hot water pass through the structures that swirl the cold water and the hot water, until the cold water and the hot water come up against each other since passing through the cold-water valve and the hot-water valve. Therefore, the position where the cold water and the hot water are mixed to be able to measure the temperature is distant from the cold-water valve and the hot-water valve, and the cold water and the hot water, which are ejected from the cold-water valve 3 and the hot-water valve 4, cannot immediately be mixed to measure the temperature unlike the embodiment.

In the case that the warm-water temperature sensor 9 that measures the temperature of the warm water, in which the cold water and the hot water are mixed, is located close to the cold-water valve 3 and the hot-water valve 4, which determine the mixing ratio of the cold water and the hot water for the purpose of the temperature control, when the opening degrees of the cold-water valve 3 and the hot-water valve 4 are altered, the temperature sensor 9 can measures the temperature of the warm water, in which the temperature changes due to the alterations of the opening degrees of the cold-water valve 3 and the hot-water valve 4, in a short time. That is, the measured temperature input from the temperature sensor 9 becomes the temperature immediately after the opening degrees of the cold-water valve 3 and the hot-water valve 4 are changed, thereby improving a responsive property.

Therefore, for example, even if the complicated control is not performed based on a simulation result or a prediction expression of the temperature change, the temperature can be controlled with relatively high accuracy by the simple control such that the mixing ratio of the cold water is sequentially increased in the case that the temperature of the warm water is higher than the set temperature, and such that the mixing ratio of the hot water is sequentially increased in the case that the temperature of the warm water is lower than the set temperature. Accordingly, a control program to control the hot and cold water mixer can be simplified. This enables the development cost of the control program to be reduced.

As described above, the structure that swirls the cold water and the hot water is eliminated between the cold-water valve 3 and the hot-water valve 4 and the mixing chamber 6, and the centers of the inflow ports of the cold water and the hot water are deviated from the center of the body (the centers of the cold-water valve 3 and the hot-water valve 4) in the structure that swirls the cold water and the hot water. Therefore, the complicated structure that swirls the cold water and the hot water is eliminated, there is a small difference between the hot and cold water mixer of the embodiment and the hot and cold water mixer having the structure that does not swirl the cold water and the hot water, so that the production cost of the structure that swirls the cold water and the hot water can be reduced. The enlargement of the hot and cold water mixer due to the addition of the structure that swirls the cold water and the hot water can be suppressed.

Fig. 6 is a graph in which a measured value (a circle in the graph) of the temperature, the temperature of the cold water, the temperature of the hot water, a calculated value (a triangle in the graph) of the temperature of the warm water are compared when the mixing ratio of the cold water and the hot water is gradually varied from the cold-water-rich state to the hot-water-rich state in the hot and cold water mixer of the embodiment. The measured value of the temperature is measured by the temperature sensor 9 when the cold water and the hot water are mixed. The calculated value of the temperature of the warm water is calculated by the mixing ratio of the cold water and the hot water.
As can be seen from Fig. 6, the calculated value of the temperature and the measured value of the temperature are extremely close to each other, and the temperature sensor 9 accurately measures the temperature. This shows that the mixed cold water and hot water are substantially homogenized at the position of the temperature sensor 9.

- 1: BODY
- 2: MOTOR UNIT
- 3: COLD-WATER VALVE
- 4: HOT-WATER VALVE
- 12: OUTFLOW PORT UNIT (OUTFLOW PORT)
- 13: COLD-WATER INFLOW PORT UNIT (INFLOW PORT)
- 14: HOT-WATER INFLOW PORT UNIT (INFLOW PORT)
- 15: MIXING CHAMBER
- 16: COLD-WATER SWIRLING PART
- 17: HOT-WATER SWIRLING PART

## Claims

1. A hot and cold water mixer **characterized by** comprising:
a body that includes a mixing chamber, the mixing chamber mixing hot water and cold water therein;
a cold-water valve that is provided in the body to adjust a cold-water flow rate, an ejection side of the cold-water valve being oriented toward the mixing chamber;
a hot-water valve that is provided in the body to adjust a hot-water flow rate, an ejection side of the hot-water valve being oriented toward the mixing chamber;
a cold-water inflow port that is provided in an in-take side of the cold-water valve of the body;
a hot-water inflow port that is provided in an in-take side of the hot-water valve of the body;
an outflow port that is provided while communicated with the mixing chamber of the body;
a cold-water swirling part that is provided between the cold-water inflow port and the cold-water valve to generate a swirling flow in the cold water flowing into the cold-water valve; and
a hot-water swirling part that is provided between the hot-water inflowport and the hot-watervalve to generate a swirling flow in the hot water flowing into the hot-water valve.

2. The hot and cold water mixer according to claim 1, **characterized in that** the body is formed into a substantially cylindrical shape,
the cold-water valve and the hot-water valve face each other with the mixing chamber interposed therebetween,
a line segment connecting a center of the cold-water valve and a center of the hot-water valve and a center line along an axial direction of the body are disposed so as to substantially overlap each other, and
center lines of the cold-water and hot-water inflow ports are substantially cross to the center line of the body, and the center lines of the cold-water and hot-water inflow ports are deviated from the center line of the body so as not to be cross to the center line of the body, thereby configuring the cold-water and hot-water swirling parts.

3. The hot and cold water mixer according to claim 1 or 2, **characterized in that** a swirling direction of the cold water in the cold-water swirling part and a swirling direction of the hot water in the hot-water swirling part are identical to each other.
